# EUROPEAN PATENT APPLICATION

(11) **EP 4 733 732 A1**
(43) Date of publication of application: **29.04.2026**
(21) Application number: 25175680.5
(22) Date of filing: 12.05.2025
(51) Int. Cl.: G01M 5/00, G01N 29/04, G01N 29/22, G01N 29/265, G01N 29/34

(54) **SCANNING SYSTEMS, METHODS, AND DEVICES WITH SLIDABLE AXIS MOBILITY CONTROL**

(30) Priority: 22.10.2024 US 202418923579
(71) Applicant: GMA-Werkstoffprufung GmbH, 40016 Düsseldorf (DE)
(72) Inventor: GLASER, Gerrit, 21640 Horneburg (DE); LESNIEWSKI, Pawel, 21640 Horneburg (DE)
(74) Representative: Carpmaels & Ransford LLP

(57) **Abstract**

Systems, methods, and devices include a robotic scanning device for performing a test scan on a target surface. The robotic scanning device has a sliding axis-based mobility system, which includes one or more slide rails slidably coupled together by a control housing. A first pair of actuatable coupling feet extend from the first slide rail; and a second pair of actuatable coupling feet extend from the second slide rail, thus forming a four-foot configuration. A scanning system disposed on the sliding axis-based mobility system can collect, receive, and transmit scanning information (e.g., ultrasonic data). Moreover, the robotic scanning device includes an integrated computing device including a control system operable to perform various mobility maneuvers. The mobility maneuvers can involve movements generated by controlled actuation of the sliding axis-based mobility system, causing the slide rails to move, and attaching and detaching the actuatable coupling feet to the target surface.

## Description

### TECHNICAL FIELD

The present disclosure is related to devices for non-destructive testing and more specifically, to devices and methods for performing non-destructive testing of structures and surfaces having planar and irregular geometries.

### BACKGROUND

Non-destructive inspection of critical operating parts is typically performed on wind turbine components to ensure structural standards are met. Modern composite parts, such as wind turbine rotor blades, contain numerous stress-concentrating geometries that create wear over time. Most non-destructive testing is done manually, which is not cost-effective because it requires too much time. Nor is manual testing sufficiently accurate due to the difficulty in reproducing the manual testing procedure with reliable consistency.

It is with these observations in mind, among others, that various aspects of the present disclosure were conceived and developed.

### SUMMARY

The technology disclosed herein can address the forementioned issues. For instance, a robotic scanning device can include a sliding axis-based mobility system having a first slide rail movably coupled to a second slide rail by a control housing. The device can also include a first set of pneumatic coupling feet extending from the first slide rail; and/or a second set of pneumatic coupling feet extending from the second slide rail. Additionally, the device can include a scanning sensor disposed on the sliding axis-based mobility system. The device can also have a computing device including a control system operable to perform a mobility maneuver by sending an instruction causing the second slide rail to move relative to the first slide rail.

In some examples, the control housing defines a first rail channel for receiving the first slide rail and a second rail channel for receiving the second slide rail such that the first slide rail is positioned between 80° and 100° (e.g., 90°) relative to the second slide rail. The mobility maneuver can be a linear motion of the robotic scanning device caused by a series of operations performed by the control system including: maintaining a first suction force with the first set of pneumatic coupling feet to secure the first slide rail to a target surface being scanned; changing a position of the second set of pneumatic coupling feet by sliding the first slide rail relative to the second slide rail; actuating the second set of pneumatic coupling feet to create a second suction force securing the second slide rail to the target surface; decreasing the first suction force to release the first set of pneumatic coupling feet from the target surface; and/or changing a position of the first set of pneumatic coupling feet by sliding the first slide rail relative to the second slide rail.

Additionally, the mobility maneuver can be a rotational motion caused by a series of operations performed by the control system including: maintaining a first suction force with a first pneumatic coupling foot to secure a first end of the first slide rail to a target surface; maintaining a second suction force with a second pneumatic coupling foot to secure a second end of the second slide rail to the target surface; and/or simultaneously sliding the first slide rail relative to the control housing and sliding the second slide rail relative to the control housing. Also, the scanning sensor can include an ultrasonic-based data acquisition system. The first set of pneumatic coupling feet can include a first pneumatic coupling foot extending from a first end of the first slide rail and a second pneumatic coupling foot extending from a second end of the first slide rail; and/or the second set of pneumatic coupling feet can include a third pneumatic coupling foot extending from a third end of the second slide rail and a fourth pneumatic coupling foot extending from a fourth end of the second slide rail. Moreover, the control housing can include a first roller positioned against the first slide rail and controlled by a first servo motor; and/or a second roller positioned against the second slide rail and controlled by a second servo motor.

In some examples, a robotic scanning device can include a mounting board of the control housing. The robotic scanning device can also include a first post for the first roller extending from a first position on the mounting board; and a second post for the second roller extending from a second position on the mounting board. Moreover, a wireless transmitter can be operable to send sensor data collected by the scanning sensor from the robotic scanning device to a remote computing device, the remote computing device being configured to use the sensor data to generate, for presentation at a display, a visual indication of cracking or de-lamination. Moreover, a pneumatic coupling foot of the first set of pneumatic coupling feet can include a five-channel, electromechanical valve vacuum generator.

In some scenarios, the robotic scanning device can include a sliding axis-based mobility system including: a first slide rail coupled to a second slide rail by a control housing. The device can also include a first actuatable coupling foot extending from the first slide rail; and a second actuatable coupling foot extending from the second slide rail, a scanning sensor disposed on the sliding axis-based mobility system. Furthermore, the device can also include a computing having a control system operable to perform a mobility maneuver by sending one or more instructions causing at least one of: a movement of the first slide rail relative to the second slide rail, or a change to a suction force generated by the first actuatable coupling foot or the second actuatable coupling foot.

In some examples, the first actuatable coupling foot includes an extendable, retractable, and/or rotatable pneumatic cylinder. The first actuatable coupling foot can also include a pneumatically lockable ball joint coupled to an end of the pneumatic cylinder. The computing device can be operable to perform a two-axis scan with the scanning sensor during the mobility maneuver. Also, the scanning sensor can include one or more ultrasonic sensor coupled to the first slide rail and/or the second slide rail. Moreover, the ultrasonic sensor can use a water interface to attach to a target surface. The robotic scanning device can include a water supply container providing water to the water interface; and/or a water circulation system for collecting and redistributing the water back to the water supply container.

In some examples, a method of performing a structural scan can include securing a first slide rail, defining a first axis of a robotic scanning device, to a target surface of a structure using one or more first actuatable feet extending from the first slide rail; sliding a second slide rail, defining a second axis of the robotic scanning device perpendicular to the first axis, relative to the first slide rail; actuating one or more second actuatable feet extending from the second slide rail to secure the second slide rail to the target surface; releasing the one or more first actuatable feet from the target surface; sliding the first slide rail relative to the second slide rail; and/or scanning the target surface with a scanning sensor disposed on the first slide rail or the second slide rail.

In some instances, sliding the second slide rail includes actuating one or more rollers disposed at a control housing which links the first slide rail to the second slide rail. The method can also include generating sensor data, with the scanning sensor, representing a scanned structure; and presenting, at a display device and based on the sensor data, an indication of at least one of cracking or de-lamination. Furthermore, the method can include performing a plurality of mobility maneuvers, with the robotic scanning device, based on dimension data corresponding to a structure of the target surface. The plurality of mobility maneuvers can include a linear motion created by sliding the first slide rail relative to the target surface while the second slide rail is secured to the target surface; and/or a rotational motion created by simultaneously sliding, relative to a control housing, the first slide rail and the second slide rail, while maintaining a first end of the first slide rail secured to the target surface; and/or a second end of the second slide rail to the target surface.

### BRIEF DESCRIPTION OF THE DRAWINGS

FIG. 1 depicts an example system including a robotic scanning device with a sliding axis-based mobility system in accordance with aspects of the present disclosure.
FIG. 2 depicts an example system including a pneumatic coupling foot of a robotic scanning device in accordance with aspects of the present disclosure, which can form at least a portion of the system depicted in FIG. 1.
FIG. 3 depicts an example system including a control box of a robotic scanning device in accordance with aspects of the present disclosure, which can form at least a portion of the system depicted in FIG. 1.
FIG. 4A depicts an example system including a robotic scanning device with a mobility maneuver forming a linear motion in accordance with aspects of the present disclosure, which can form at least a portion of the system depicted in FIG. 1.
FIG. 4B depicts an example system including a robotic scanning device with a mobility maneuver forming a rotational motion in accordance with aspects of the present disclosure, which can form at least a portion of the system depicted in FIG. 1.
FIG. 5 shows an example system including a robotic scanning device with a display presenting information based on sensor data in accordance with aspects of the present disclosure, which can form at least a portion of the system depicted in FIG. 1.
FIG. 6 depicts an example method of testing a structural component which can be performed by any of the systems disclosed herein.
FIGs. 7A-7D are block diagrams illustrating exemplary scanning operations in accordance with aspects of the present disclosure.
FIG. 7E is a block diagram illustrating exemplary aspects of generating composite sensor data in accordance with aspects of the present disclosure.

### DETAILED DESCRIPTION

It will be appreciated that numerous specific details are set forth in order to provide a thorough understanding of the examples described herein. However, it will be understood by those of ordinary skill in the art that the examples described herein can be practiced without these specific details. In other instances, methods, procedures, and components have not been described in detail so as not to obscure the related relevant feature being described. Also, the description is not to be considered as limiting the scope of the examples described herein. The drawings are not necessarily to scale, and the proportions of certain parts may be exaggerated to better illustrate details and features of the present disclosure.

The systems, methods, and devices disclosed herein can include a robotic scanning device which uses multiple sliding axis rails for testing the components of a wind turbine for structural integrity issues. For instance, the systems can collect data used to detect cracking, de-laminations, wrinkles, dry-glass, and/or combinations thereof. This technology can be used to assess the structural integrity of rotor blades of the wind turbine. The robot can move about the surface of these target component while collecting and/or transmitting the collected data to another computing device. The robot can use its sliding axis mobility system, including pneumatic suction feet to traverse the component using a sequence of linear and/or rotational mobility maneuvers.

In some examples, the systems disclosed herein can be used to provide a volumetric method of testing commercial service purposes which benefit from obtaining information about the internal structure of a part. The robotic technology of these systems can automate many operations for ultrasonic testing of wind blades with reduced complications. For instance, some features of the robotic sensor device can include automatic movement which provides an automated inspection of one test area unit being 600 millimeter (mm) x 600 mm, 2060 mm x 650 mm, and/or any other areas defined by the lengths of the sliding rails of the robotic scanning device. The scanning operations can be high speed with sliding velocities of 0.8 meters (m) / second (sec) to 3 m/sec (e.g., 1 m/sec or 2 m/sec).

Various benefits can result from this disclosed technology, such as reducing downtime of equipment inspected using the devices and techniques disclosed herein and increasing the predictability of maintenance. Also, these robotic systems can provide greater control, precision, consistency, decision-making, and increased operational efficiency, for instance, by reducing the human factor and improving reproducibility. Furthermore, usage of the disclosed technology can be more amenable to scalability than manual inspections. In some scenarios, the robotic scanning device can perform fast data collection with high speed, up to 1.5 m/sec and/or up to 100 m² inspection per 10 hours on the ground (e.g., with a 1:10 mm resolution). Some examples can include up to 12 m² inspection per 10 hours when deployed for inspection of blades of a wind turbine in the field.

Additionally, the scanning robot device can have increased versatility and flexibility through easy transport options because the device can be transported without much effort by plane or passenger car. These systems can be quickly deployed. For instance, one technician can setup the system on the ground in 10 minutes, and/or can use 30 minutes to descend using rope access. In some aspects, deployment may be facilitated via a drone or other air-based vehicle (e.g., due to reduced weight of the scanning robot device), thereby eliminating the need for a technician to climb on ropes to deploy the scanning robot device on a wind turbine blade. Furthermore, as compared to other inspection techniques, the disclosed systems can have faster response times to customer enquiries received with short notice (e.g., due to the simplified deployment and rapid inspection capabilities provided by the disclosed embodiments). Also, these systems can use a standardized battery pack, making acquisition of a power source for the scanning robot device more simple.

In some scenarios, higher quality images, as compared to previous techniques, can be generated by the disclosed systems. Using automated movement of the robot in all directions as it travels along a scanning path can provide higher scan reproducibility and higher cost-effectiveness by eliminating additional testing hours, arrival and departure, overnight stays, waiting times, etc. The systems can be deployed using only one person, in some scenarios, after four hours training.

Moreover, due to its modular construction, the robotic scanning device can be used for testing of different blade areas: a trailing edge, a leading edge, a spar cap and/or a root section. The programmable movements of the robotic scanning device can also be adjusted to inspect various defects with highest possible resolution. The disclosed systems can be cheaper and simpler to run and maintain than other systems while operating in difficult industrial environments (e.g., scaffolding, dust, dirt, etc.) Additionally, the robotic scanning device can have a low profile with AUT probe capability, and a minimum 170 °C surface capability. As such, the system can provide an automated solution for a volumetric blade inspection and also the verification and dimensioning of previously detected faults.

In some scenarios, the disclosed systems can perform overhead inspection under difficult access conditions with reduced/eliminated possibility of part rotation. Rope access may be used for deployment of the robotic scanning device, and/or drone access may be used. It is also to be understood the technology disclosed herein may apply to other structures in addition to or alternatively to wind turbines, such as airplane components, ship components (e.g., welds), and so forth. This type of non-destructive testing provides an ability to assess parts without damaging them. The inspection can occur without interfering with the final use of the inspected structure, product, or component, during almost all stages of production, during service and fatigue testing, or at end-of-life.

Additional benefits and advantages of the presently disclosed technology will become apparent from the detailed description below.

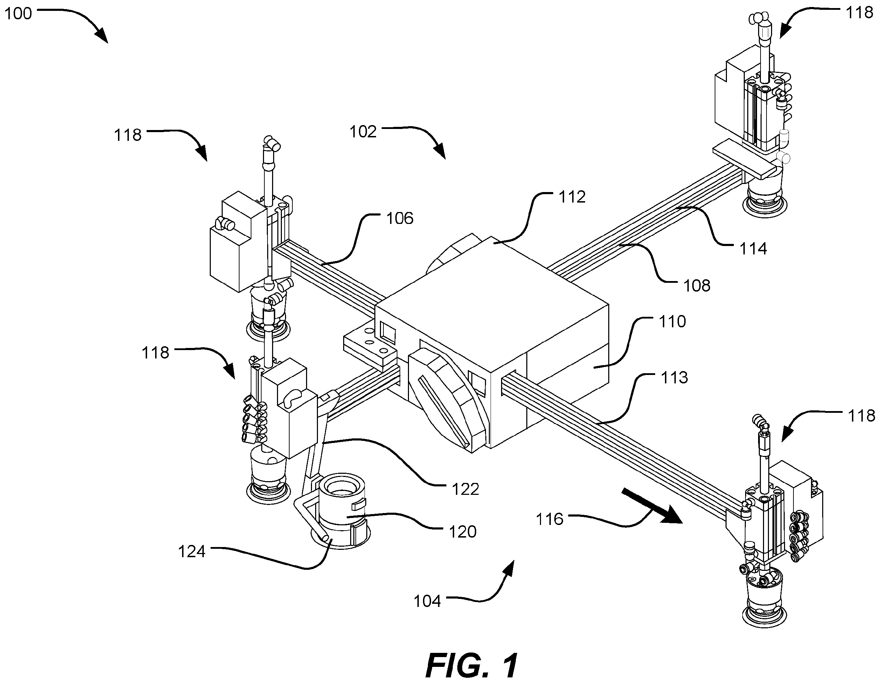

FIG 1. depicts an example system 100 including a robotic scanning device 102 with a sliding axis-based mobility system 104. The sliding axis-based mobility system 104 can provide propulsion and/or navigation for the robotic scanning device 102 by using one or more interconnected slide rails. For instance, a first slide rail 106 can be linked to a second slide rail 108 by a connector control box 110. The first slide rail 106 can define a first axis 113 and the second slide rail 108 can define a second axis 114 which can be perpendicular to the first axis 113. Any number of slide rails can be linked at any angle (e.g., perpendicularly or non-perpendicularly) to form the slide axis-based mobility system 104, as disclosed herein. The control box 110 can include components for actuating a sliding motion 116 for the first slide rail 106 and/or the second slide rail 108, such that these slide rails move relative to the control box 110 and each other.

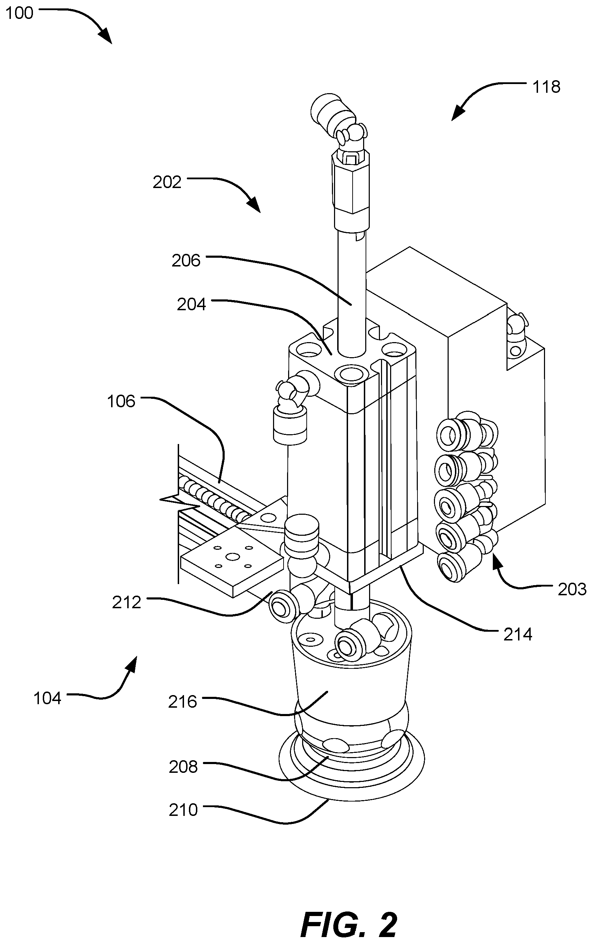

The robotic scanning device 102 can also include one or more actuatable coupling feet 118, such as four actuatable coupling feet 118 distributed along the first slide rail 106 and/or the second slide rail 108. Two actuatable coupling feet 118 can extend perpendicularly from both ends of the first slide rail 106, and/or two more actuatable coupling feet 118 can extend perpendicularly from the second slide rail 108 (e.g., in a same direction as those extending from the first slide rail 106). The actuatable coupling feet 118 can include suction feet (e.g., four suction feet) with two or more feet per axis. These actuatable coupling feet 118 can be independently controllable, extendable, rotatable, and/or can include pneumatically lockable ball joints to attach to the target surface, as discussed in greater detail below regarding FIG. 2.

In some examples, the robotic scanning device 102 includes the control box 110 with a control housing 112 at least partially enclosing components for effectuating the sliding motions. The control housing 112 can at least partly contain a computing device, wireless transmitter, replaceable battery pack, cabling, actuators, pneumatic valves, pumps, and/or other components for controlling the actuatable coupling feet and/or the sliding motions.

Moreover, the robotic scanning device 102 can include a customizable sensor housing 120, attached by a sensor arm 122, and holding a scanning sensor 124, such as one or more ultrasonic transducers using phased array techniques. A scanning axis in the desired angle can be established via the sensor housing 122 and the sensor arm 122. Additionally, a water pump can be communicatively coupled to the control system for providing water, from a water supply container (e.g., on the robotic device itself and/or on site nearby, such as a reservoir of water provide at a nacelle of a wind turbine or provided in connection with an inspection of blades of a wind turbine), to a water interface of the scanning sensor 124. The water interface can form on the surface of the target area being scanned by the scanning sensor 124 when the scanning sensor 124 presses and/or seals against the surface. The system 100 can include a water circulation system for collecting water at or around the water interface and returning it back into a water supply container for recirculated use. This can include operating one or more vacuum suction tubes, pumps, actuators, and other components communicatively coupled to the control box 110, thereby reducing the amount of water needed to perform inspection. Moreover, the robotic scanning device can have a lightweight low profile with removable and/or compactable features for storage and transportation.

In some situations, the scanning system of the robotic scanning device 102 can include one or more integrated encoders. For instance, one, two, three, four, or more integrated encoders with separate or combined controllers can be used. As such, these systems can conduct automated scans can with a higher resolution than manual scans.

In some examples, the robotic scanning device 102 can perform different types of scans. For instance, the robotic scanning device 102 can perform a B-Scan and/or a C-Scan. The B-scan can be a pulse-echo technique which is expanded in a second direction. One scan can be assigned to one point. A visualization of a cross section of the component can be generated with additional position data and the signal propagation times, then the system can assign colors to the respective amplitudes. The C-Scan can be performed by expanding the data recording by an additional axis. In this way, a top view of the test part can be generated.

By way of example, the system 100 can scan two axes (e.g., X and Y, which may correspond to the axes formed by the first and second slide rails 106, 108, respectively) at a constant resolution. The recorded data can have a high degree of resolution for generating structural information about the scanned part. Another feature which can provide a higher degree of automation is feedback of the ultrasonic signal to the motion controller. Depending on the signal received, the motion controller can slightly change the trajectory of the device's movement, causing a correction to the component test.

Furthermore, in some examples, scans performed by the robotic scanning device 102 can provide a trigger mechanism (e.g., or alarm), which can be fed to the motion controller and then used to detect angular offsets. With these, the orientation of the scanner can be automatically adjusted for automated angle correction. This functionality can automatically change the direction of movement according to the signal received. For example, if an amplitude is detected at a predefined depth during the examination of a structural element, the edge of the element can be determined depending on the height of this amplitude using a 6 dB drop method. The position of the axis containing the probe (X-axis) can be considered in the calculation and the scanner can be rotated by the specified angle. In this way, the entire component can be inspected, and the data can be recorded in parallel - thus improving the effectiveness of defect dimensioning.

In some instances, the systems 100 disclosed herein can provide overhead inspection and inspection under difficult access conditions (e.g., wind speeds up to 12 m/s and/or narrow space above the system) and/or with no possibility of part rotation. This application can be used when it is impossible (or very expensive) to change the position of the tested part. Due to the usage of a pneumatic suction cup system, the low weight of the disclosed scanning system(s), and the ability to move in two directions, a user can position the system in almost any position and test any critical blade component (e.g., root section, main girder, trailing and leading edge). The system 100 can also be used on mounted components, even via rope access, and thus can minimize the work involved in scanning hard to reach areas. Furthermore, the systems 100 can have improved ease of use, for instance, by reducing physical stress and the amount of training needed for use. The system 100 can be designed to be operated by one person (e.g., for applications on the ground) and two persons (e.g., with rope access). Some iterations may use drones as a platform for robotic handling and positioning on the wind turbine blades for inspection.

FIG. 2 depicts an example system 100 including a robotic scanning device 102 with an actuatable coupling foot 118 being a pneumatic coupling foot 202. For instance, one or more pneumatic coupling feet 202 can form a pneumatic system 203 using actuatable modules at or proximate to the ends of the axes (e.g., the first axis 113 and/or the second axis 114). The pneumatic coupling foot 202 can include an electromechanical valve 204 (e.g., a 5-channel valve vacuum generator) such that each suction foot assembly is controlled independently. The valve channels can be mechanically coupled to adhere to a particular motion sequence for the robotic scanning device 102. Additionally, each pneumatic coupling foot 202 can have four unique degrees of freedom. Furthermore, the actuatable coupling foot 118 can include a post 206 that is retractable, extending, and/or rotatable relative to control signals received from the control box 110. The post 206 can include a hollow cylinder or other shape (e.g., a square cross- section, rectangular cross-section, triangle cross-section, and so forth).

In some instances, the pneumatic coupling foot 202 can include a ball joint 208 to which a suction foot cup 210 is attached. The ball joint 208 can include a predetermined number of swivel directions (e.g., two, four, etc.), or the ball joint 208 can swivel in any direction (e.g., 360°). Additionally, the ball joint 208 can undergo a rotational motion in line with the rotation of the post 206. The ball joint 208 can be pneumatically lockable in a static position. Accordingly, this assembly can provide four unique degrees of freedom (DoF) for each foot with the first DoF being a pneumatic cylinder that can be extracted and retracted to move the axes without dragging. The pneumatically lockable ball joint 208 can provide three more DoF by being able to rotate around three axes. In an aspect, the ball joint 208 can be used to attach the scanning sensor 124 to concave and convex surfaces and still be able to scan.

In additional or alternative aspects, multiple scans can be performed with the sensor 124 before the robotic scanning device 102 repositions itself. For example, the sensor 124 may be attached to the second slide rail 108 and while performing the scanning can travel back and forth along the second axis 114 and, between scans, the second rail 108 can move along the first axis 113, for instance, by moving the control box 110 along the first sliding rail 106. This can facilitate multiple (e.g., parallel) scans in the direction of the second axis 114 before the crawler moves to a new location and begin scans again. Furthermore, the sensor 124 can move along the second axis 114 simultaneously with the control box 110 moving along the first axis 113 to perform a scan in a direction non-perpendicular to the first axis 113 and the second axis 114.

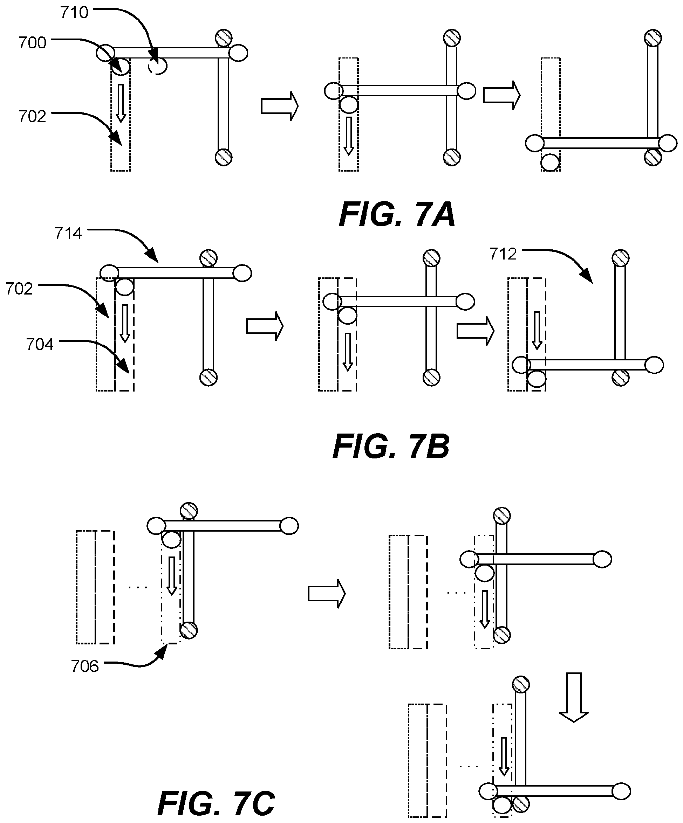

As an illustrating and non-limiting example, FIGs. 7A-7C are block diagrams illustrating an exemplary scanning operation in accordance with aspects of the present disclosure. As shown in FIG. 7A, a robotic scanning device (e.g., the robotic scanning device 102 of FIG. 1) may include a sensor 700. The sensor may be positioned at a first location and scan an area 702 by moving a slide rail to which the sensor 700 is attached in a first direction, as shown in FIG. 7A. After completing a first pass, the slide rail may be moved horizontally such that a new area 704 is scanned, as in FIG. 7B. Additional scanning areas may be scanned by modifying the location of the sensor 700 via movement of the slider rail until a final area 706 has been scanned, as shown in FIG. 7C. It is noted that scanning may be performed in multiple directions. For example, after finishing scanning of are 702 the scanner may be positioned as shown at the right of FIG. 7A. Subsequently, the sensor may be positioned as shown at orientation 712 of FIG. 7B and scanning may be performed in an opposite direction used to scan area 702 until orientation 714 is achieved. Alternatively, the scanner may be positioned to orientation 714 following the scan of area 702 and scanning may proceed until orientation 712 is achieved. In some aspects, multiple sensors may be provided. For example, FIG. 7A shows a sensor 710 disposed laterally with respect to sensor 700. During the scan shown in FIG. 7A, the sensor 710 may be utilized to capture sensor data for an additional scanning area (e.g., a scanning area adjacent area 704). Providing multiple sensors may enable an area to be scanned more quickly (e.g., via less passes due to the ability to scan multiple areas of the target surface in a single scan pass). The scanning data from the multiple sensors may then be combined to create scanning data for the entire scanned area (e.g., areas 702-706). It is noted that while FIG. 7A shows single and two sensor embodiments, in some embodiments more than two sensors may be used. Additionally, it is noted that the sensor 700 and sensor 710 may be different types of sensors. Such configuration may enable different types of inspection to be performed using robotic scanning devices in accordance with aspects of the present disclosure in a single scan (i.e., without requiring a first complete scan with a first type of sensor and a second complete scan with a second type of sensor). Once scanning is completed, the robotic scanning device may perform one or more mobility operations to relocate the robotic scanning device at a new scanning area and the above-described operations may be repeated to perform additional scanning of the target structure, such as a surface of a blade of a wind turbine.

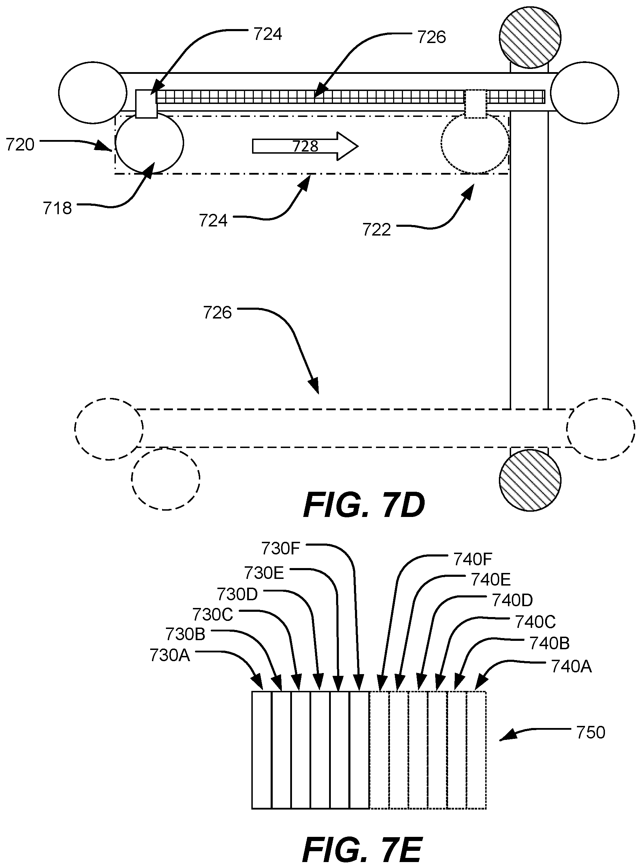

FIG. 7D is a block diagram illustrating an additional exemplary scanning operation in accordance with aspects of the present disclosure. As shown in FIG. 7D, a robotic scanning device (e.g., the robotic scanning device 102 of FIG. 1) may include a sensor 718 (e.g., which may be the same as the sensor 700 of FIGs. 7A-7C). The sensor may be mounted to a means for sliding the sensor 718 laterally along a slide rail from an orientation 720 to an orientation 722, which may result in scanning of an area 724. Once the area 724 is scanned, the slide rail may be moved to a new position and a second scan may be performed (i.e., in the same or the reverse direction used to perform the scan of the area 724). The slide rail may continue to be moved and additional scans may be performed until the orientation 726 is achieved, at which point one or more mobility operations may be used to reposition the robotic scanning device to perform scans of additional areas of the structure being inspected. In an aspect, the means for sliding the sensor 718 laterally along the slide rail may include chain 726 (or other mechanism, such as a cable, rope, wire, etc.) that is coupled to the sensor 718 via a bracket 724. The chain 726 may be driven by a motor contained within the control box 110. The motor may be configured to drive the chain 726 in the direction indicated by arrow 728 to facilitate a first scan and then drive the chain 726 in a second direction opposite the direction indicated by arrow 728 to facilitate a second scan or to return the sensor 718 to an initial position (e.g., if scanning is performed in a single direction. It is noted that scanning technique shown in FIG. 7D requires less movement of the slide rail during scanning, which may reduce energy consumption and time required to perform scanning as compared to the scanning technique illustrated in FIGs. 7A-7C, since the latter technique would require decoupling and recoupling the suction feet multiple times during each pass of the sensor across the scanned area. It is noted that the chain 726 (or equivalent means for moving the sensor(s)) and other structures (e.g., the slide rails, the control housing, etc.) may be formed of a lightweight material (e.g., aluminum, a durable plastic, carbon fiber, other materials, or a combination thereof) to keep the overall weight of the robotic scanning device low.

In an aspect, the robotic scanning device may include one or more positioning systems to orient the robotic scanning device relative to the structure being inspected. For example, the positioning system(s) may include a global positioning system (GPS). Additionally or alternatively, the one or more positioning systems may include one or more gyroscopes, accelerometers, and other sensors that may be used to measure a change in position of the robotic scanning device during scanning operations. The positioning system(s) may be used to track where each scan begins to enable the sensor data obtained from scanning each scan area (e.g., the areas 702-706) to be aggregated to produce composite sensor data (e.g., sensor data for the entire scanned area). It is noted that the composite sensor data may include sensor data aggregated based on multiple scans of the structure while the robotic scanning device is in a single position (e.g., during scanning of a single area) or in multiple positions (e.g., scans performed at different locations of the target structure may be pieced together to provide sensor data representing the entire scanned area despite the robotic scanning device performing scans at multiple locations). For example, FIG. 7E is a block diagram illustrating exemplary aspects of generating composite sensor data in accordance with aspects of the present disclosure.

In particular, FIG. 7E illustrates composite sensor data 750 formed based on sensor data obtained via multiple scans of a target structure. The multiple scans include a first set of scans 730A-730F, which may be obtained via scans performed as described above with reference to FIGs. 7A-C or FIG. 7D while the robotic scanning device is located at a first location on the structure under inspection. The multiple scans also include a second set of scans 740A-740F, which may be obtained via scans performed as described above with reference to FIGs. 7A-C or FIG. 7D while the robotic scanning device is located at a second location on the structure under inspection. The composite sensor data 750 may be formed by aggregating the sensor data based on information provided by positioning system, such as to know that scan 730A was performed at a first position and scan 730B was performed at a second position that is adjacent the position used to perform the scan 730A. Similarly, the positioning information may be used to orient the second set of scans 740A-740F relative to the first set of scans 730A-730F. As can be appreciated from the foregoing, generating composite sensor data may enable visualizations of an entire structure to be generated based on scans performed on smaller subsections of the structure. For example, the first set of scans 730A-730F may correspond to scans of a first section of a blade of a wind turbine and the second set of scans 740A-740F may correspond to scans of a second section of the blade. In such a scenario, the composite sensor data 750 may represent the entire scan of the blade and visualizations generated from the composite sensor data 750 may enable a user (e.g., an inspector) to see the entire blade and any defects (e.g., cracks, de-laminations, erosion, or other anomalies described herein) detected during the scanning.

Referring back to FIG. 2, the pneumatic coupling foot can include a foot mounting bracket 212 coupled to an end of the sliding rail (e.g., the first slide rail 106 and/or the second slide rail 108). The foot mounting bracket 212 can include one or more first planar surfaces forming a receiving space for the end of the sliding rail. Additionally or alternatively, the foot mounting bracket 212 can include a horizontal mounting surface 214 to which the assembly for the electromechanical valve 204 attaches (e.g., on a top surface), with the ball joint 208 disposed below the horizontal mounting surface 214. The post 206 can pass through aligned openings in the horizontal mounting surface, the electromechanical valve 204, and/or a foot housing 216 of the ball joint 208.

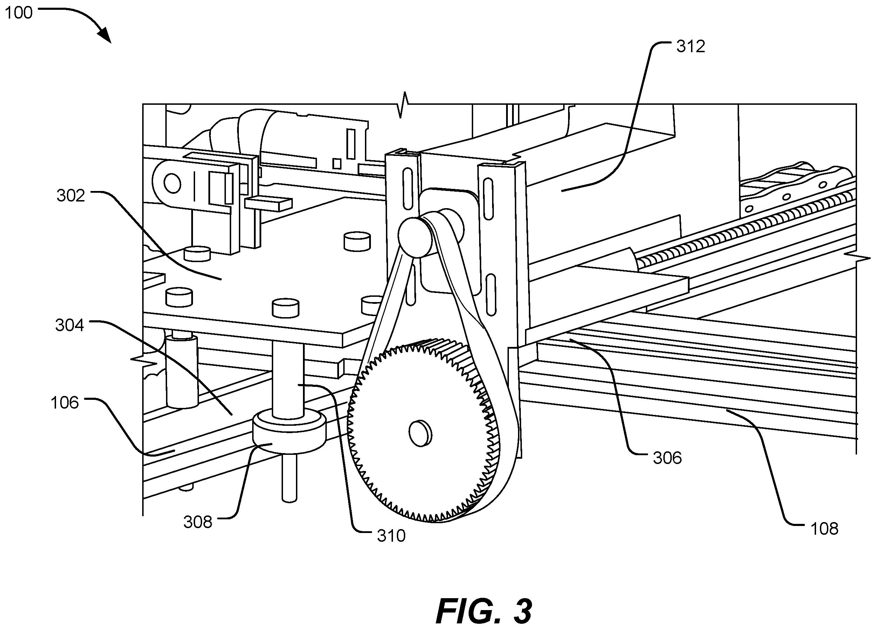

FIG. 3 depicts an example system 100 including the robotic scanning device 102. As depicted in FIG. 3, the robotic scanning device 102 can include the control box 110 with multiple components for actuating the sliding motions for the first slide rail 106 and/or the second slide rail 108.

In some examples, the control box 110 can include a mounting plate 302 (e.g., positioned horizontally) with a first rail channel 304 and/or a second rail channel 306 defined above and/or below the mounting plate 302. The first rail channel 304 and/or the second rail channel 306 can include openings/pathways to receive the first slide rail 106 and/or the second slide rail 108 such that the first slide rail 106 and/or the second slide rail 108 can pass through the control box 110. In some scenarios, the first rail channel 304 forms a perpendicular angle (e.g., or between 80° and 100°) with the second rail channel 306 to position the first slide rail 106 perpendicularly with the second slide rail.

Additionally, the control box 110 can include a first roller 308 (e.g., or a first pair of rollers) around the first rail channel 304. The first roller 308 can be coupled to a first roller extension post 310 which attaches the first roller 308 to the mounting plate 302 spaced a distance from the mounting plate 302. Moreover, the first roller 308 and/or the mounting plate 302 can be coupled to a first servo motor 312 via one or more gears which cause the first roller 308 to rotate and, thus, effectuate the sliding motion for the first slide rail 106. Similarly, a second roller can be coupled to the mounting plate 302 by a second roller extension post such that the second roller is positioned around the second rail channel 306 for effectuating the sliding motion for the second rail channel 306. The second roller can use the gears coupled to the first servo motor 312 to cause the second roller to rotate. Additionally or alternatively, the second roller can be coupled to a second servo motor which controls the sliding motion of the second slide rail 108 independently. Any of these components can be at least partially and/or fully enclosed by the control housing 112 of the control box 110.

Moreover, these actuations of the rollers, with the rollers pressed against the slide rails 106 and/or 108, can cause the slide rails 106 and/or 108 to slide in one direction or the other quickly and on command. In some scenarios, the controlled sliding motion generated by these components of the control box 110 can increase the reproducibility of scans performed with the robotic scanning device 102. This configuration can also improved efficiency, for instance, by scanning a volumetric inspection area of up to 6 m² per day, or even 20 m² per day.

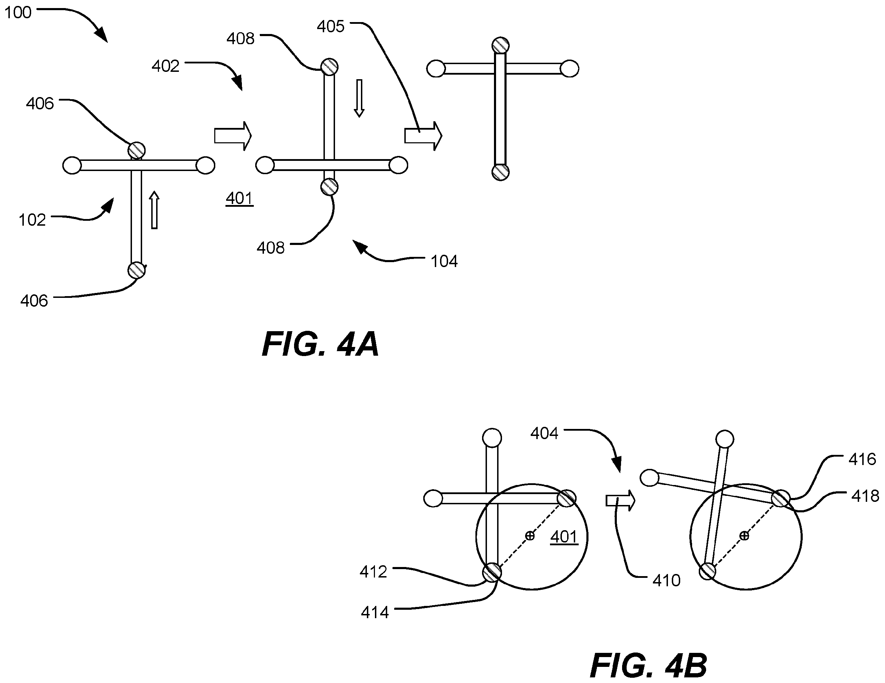

FIGS. 4A and 4B depict an example system 100 including the robotic scanning device 102 using the sliding axis-based mobility system 104. FIG. 4A shows the sliding axis-based mobility system 104 performing a linear motion operation 402. FIG 4B shows the sliding axis-based mobility system 104 performing an angular motion operation 404.

Turning to FIG. 4A, the linear motion operation 402 can be a propulsion operation in which the particular sequence of sliding steps and/or coupler actuation results in linear motion 405 for the robotic scanning device 102. To move an axis to a new position, the two actuatable coupling feet 118 perpendicular to the moved axis are locked in place. Once that is done, an axis can be moved in the target direction. The next step is to reattach the suction feet (e.g., of the moved axis) and retract the axis again to reach the target position. More particularly, to perform the linear motion operation 402, the control system can cause the robotic scanning device to: maintain a first suction force with the first set of pneumatic coupling feet 406 to secure the first slide rail 106 to a target surface 401 being scanned. Then the control system can change a position of the second set of pneumatic coupling feet 408 by sliding the second slide rail 108 relative to the first slide rail 106 (e.g., via one or more rollers depending on the axis being moved). Next, the control system can actuate the second set of pneumatic coupling feet 408 to create a second suction force securing the second slide rail 108 to the target surface 401. Additionally, the control system can decrease the first suction force to release the first set of pneumatic coupling feet 406 from the target surface 401. Then, the control system can change a position of the scanner 124 and/or the first set of pneumatic coupling feet 406 by sliding the first slide rail 106 relative to the second slide rail 108

Turning to FIG. 4B, an angular motion operation 404 can be performed by the robotic scanning device 102 to rotate the robotic scanning device 102 about an axis using an angular motion 410 created by slide rail and coupler actuations. For instance, the angle of the axes can be changed by executing a rotation around the center of a line between two fixed suction feet on different slide rails, and by driving both axes simultaneously. This angular motion operation 404 can include maintaining a first suction force with a first pneumatic coupling foot 412 to secure a first end 414 of the first slide rail 106 to the target surface 401. The control system can also maintain a second suction force with a second pneumatic coupling foot 416 to secure a second end 418 of the second slide rail 108 to the target surface 401. Then, the control system can simultaneously slide the first slide rail 106 relative to the control housing 112 while sliding the second slide rail 108 relative to the control housing 112. During this operation, the first end 414 of the first slide rail 106 and the second end 418 of the second slide rail 108 can stay secured against the target surface 401, causing the robotic scanning device to rotate. Such an operation can cause the device to rotate up to about 10° with respect to the axes 113 or 114 (e.g., depending on the position of the device 102). This rotational maneuver can be used to maintain a desired or predetermined (e.g., "correct") trajectory of movement, consistent with a position of the object under test. It should be noted that the test object, which can be a structural, built-in element, may not have the same width over its entire length. That is, the shape of the turbine blade can vary slightly. The ability to rotate the robotic scanning device 102 can ensure correct positioning over the test object and, consequently, examination of the relevant area. Additionally, movement of the robotic scanning device 102 during inspection may utilize a combination of the operations described above with reference to FIGs. 4A and 4B.

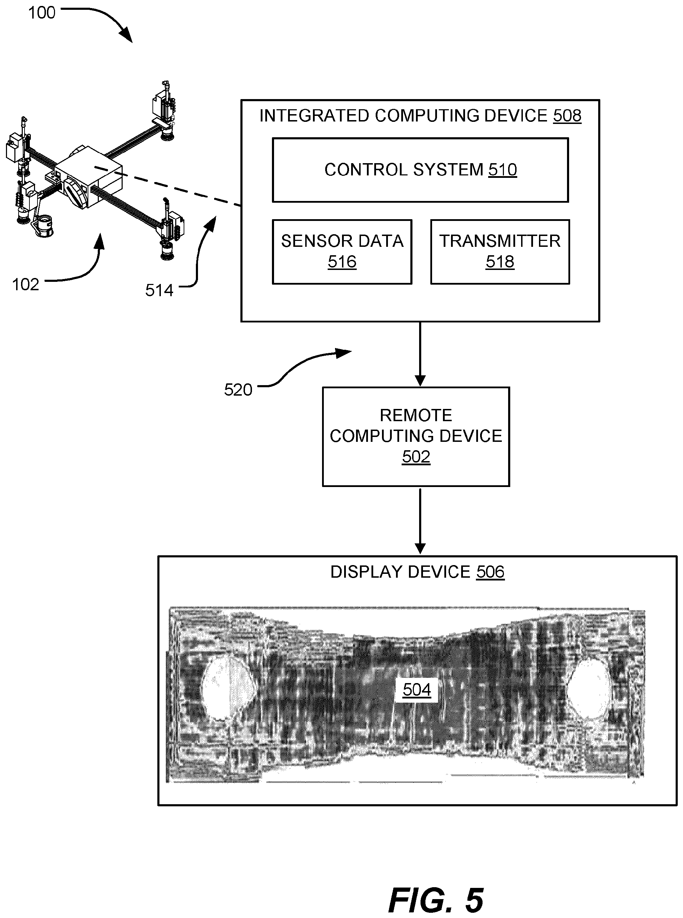

FIG. 5 depicts an example system 100 including the robotic scanning device 102 in communication with a remote computing device 502, for instance, to present structural data 504 at a display device 506. In some examples, the robotic scanning device 102 can include an integrated computing device 508 with one or more processors performing operations stored in a non-transitory memory storage device. These can include software instructions for performing operations of the control system 510 of the robotic scanning device 102, such as performing various sequences of linear and/or rotational motions, as described above with reference to FIGs. 4A and 4B, respectively. The integrated computing device 508 can also execute scanning operations which cause the scanning sensor 124 to control pneumatic actuations of the sensor housing 122, send ultrasonic pules (e.g., during inspection operations), and/or collect sensor data 516.

In some examples, the integrated computing device 508 can form at least a portion of, or be contained within, the control box 110. For instance, the integrated computing device 508 can be at least partially housed in the control housing 112. Moreover, the integrated computing device 508 can include a plurality of integrated computing devices 508 distributed throughout the robotic scanning device 102, for instance, at each of the actuatable coupling feet (e.g., at the electromechanical pump). In scenarios including multiple, distributed control boxes 110, the plurality of integrated computing devices 508 can communicate to each other and/or to a central control box 110 via a local wired or wireless communication network architecture 514 (e.g., near field communication, Wi-Fi, Bluetooth, etc.).

In some scenarios, the integrated computing device 508 can send sensor data 516 generated by the scanning sensor 124 to the remote computing device 502, for instance, using a transmitter 518 at the robotic scanning device 102 and/or a wireless network 520. The remote computing device 502 can be used by maintenance or operational personal, for instance, at a control center located at the base of a wind turbine or other location, and can include a mobile device, a tablet, a laptop computer, a desktop computer, a projector, a wearable device, and/or a maintenance kiosk or portal. Additionally or alternatively, the remote computing device 502 can be located off-site, such as at an office building or a cloud service data warehouse. The robotic scanning device 102 can use the wireless network 520 to send the sensor data 516 to the remote computing device 502 during the scanning process and/or after the scanning process. The wireless network 520 can be any type of local area network (LAN) and/or wide area network (WAN) including a cellular network (e.g., 3G, 4G, LTE, 5G, ETSI, and so forth) and/or data network (e.g., TCP/IP) Additionally, the sensor data 516 can be stored and/or processed locally at the integrated computing device 508 to perform localized actions, such as mobility control and/or scanning actions, at the robotic scanning device 102. The wireless network 520 can also be used to send control signals to the robotic scanning device 102, for example, to remotely take control of the mobility operations of the robotic scanning device. Additionally or alternatively, the robotic scanning device can receive a transmission including a data file of dimensional data or other structural data related to the target part being scanned. The robotic scanning device 102 can convert this dimensional data or structural data into a series of mobility maneuvers to perform during the scan. Moreover, the robotic scanning device 102 can upload a data file including instructions for performing a sequence of mobility maneuvers, such as a sequence of mobility maneuvers to perform scanning of one or more target sections of a blade of a wind turbine or other structure under inspection.

In some examples, the system 100 can include the display device 506 for presenting representations of the sensor data 516. The display device 506 can present a graphical user interface, for instance, on a computer or mobile device of maintenance or operations personnel. Data analytics software at the remote computing device 502 can receive the sensor data 516 (e.g., ultrasonic data) as inputs and generate visual representations of the sensor data 516. For example, the user interface of the display device 506 can present a color map, graph, chart, 2D image, 3D image, or other visual representation of the sensor data 516 representing an internal structure or other features of the scanned target area. Volumetric changes, density changes, irregularities, gradients, and other physical features can be conspicuously presented in the visual representation(s) based on the sensor data 516. As such, the visual representation(s) can be used to indicate and detect cracking, de-laminations, wrinkles, weld status, asynchronous blade pitch, ice formation/release, corrosion, strain, and/or the occurrence of high energy impacts.

Furthermore, in some examples, the system 100 can use drones as a platform for robotic handling and positioning of the robotic scanning device 102 on wind turbine blades. Human support can optionally be used to monitor the operation of the system from a close perspective, while scanner operation, data recording and/or data transmission can be automated. In other examples, such as those involving drone placement, any or all deployment actions can be automated.

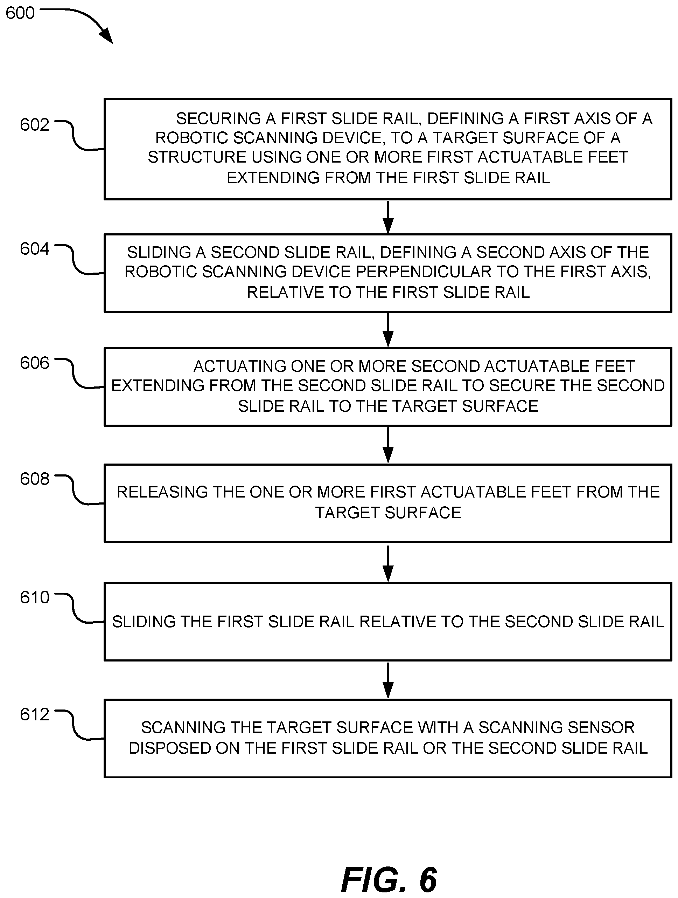

FIG. 6 depicts an example method 600 of testing a structural component which can be performed by any of the systems 100 disclosed herein. For instance, at operation 602, the method 600 can secure a first slide rail, defining a first axis of a robotic scanning device, to a target surface of a structure using one or more first actuatable feet extending from the first slide rail. At operation 604, the method 600 can slide a second slide rail, defining a second axis of the robotic scanning device perpendicular to the first axis, relative to the first slide rail. At operation 606, the method 600 can actuate one or more second actuatable feet extending from the second slide rail to secure the second slide rail to the target surface. At operation 608, the method 600 can release the one or more first actuatable feet from the target surface. At operation 610, the method 600 can slide the first slide rail relative to the second slide rail. At operation 612, the method 600 can scan the target surface with a scanning sensor disposed on the first slide rail or the second slide rail.

Any of the operations discussed herein regarding FIG. 6 or throughout this disclosure can be repeated, omitted, performed in parallel, and/or combined with any other operations discussed regarding FIG. 6 or throughout this disclosure. It is noted that while primarily described with reference to inspection of wind turbine blades, the robotic scanning device and features described herein may be readily applied to other structures for which inspection may be desired. For example, robotic scanning devices and scanning techniques disclosed herein may be used to inspect surfaces of ships, aircraft, helicopters, submarines, pipelines, storage tanks, or other types of structures. It is further noted that while primarily described with reference to ultrasonic sensors, other types of sensors may be mounted to robotic scanning devices to facilitate inspection of structures in accordance with the techniques disclosed herein, such as infrared cameras, eddy current probes, or other types of sensors. Furthermore, while the present disclosure has been described with reference to various implementations, it will be understood that these implementations are illustrative and that the scope of the present disclosure is not limited to them. Many variations, modifications, additions, and improvements are possible. More generally, implementations in accordance with the present disclosure have been described in the context of particular implementations. Functionality may be separated or combined differently in various implementations of the disclosure or described with different terminology. Any of the components or steps disclosed herein can be duplicated, omitted, and/or combined with any other components or steps disclosed herein. These and other variations, modifications, additions, and improvements may fall within the scope of the disclosure as defined in the claims that follow.

The following is a non-exhaustive list of embodiments which may or may not be claimed.
1. A robotic scanning device comprising:
   a sliding axis-based mobility system including:
      a first slide rail movably coupled to a second slide rail by a control housing;
      a first set of pneumatic coupling feet extending from the first slide rail; and
      a second set of pneumatic coupling feet extending from the second slide rail;
   a scanning sensor disposed on the sliding axis-based mobility system; and
   a computing device including a control system operable to perform a mobility maneuver by sending an instruction causing the second slide rail to move relative to the first slide rail.
2. The robotic scanning device of embodiment 1, wherein:
   the control housing defines a first rail channel for receiving the first slide rail and a second rail channel for receiving the second slide rail such that the first slide rail is positioned between 80° and 100° relative to the second slide rail.
3. The robotic scanning device of embodiment 1, wherein:
   the mobility maneuver is a linear motion of the robotic scanning device caused by a series of operations performed by the control system including:
   maintaining a first suction force with the first set of pneumatic coupling feet to secure the first slide rail to a target surface being scanned;
   changing a position of the second set of pneumatic coupling feet by sliding the first slide rail relative to the second slide rail;
   actuating the second set of pneumatic coupling feet to create a second suction force securing the second slide rail to the target surface;
   decreasing the first suction force to release the first set of pneumatic coupling feet from the target surface; and
   changing a position of the first set of pneumatic coupling feet by sliding the first slide rail relative to the second slide rail.
4. The robotic scanning device of embodiment 1, wherein:
   the mobility maneuver is a rotational motion caused by a series of operations performed by the control system including:
   maintaining a first suction force with a first pneumatic coupling foot to secure a first end of the first slide rail to a target surface;
   maintaining a second suction force with a second pneumatic coupling foot to secure a second end of the second slide rail to the target surface; and
   simultaneously sliding the first slide rail relative to the control housing and sliding the second slide rail relative to the control housing.
5. The robotic scanning device of embodiment 4, wherein:
   the scanning sensor includes an ultrasonic-based data acquisition system.
6. The robotic scanning device of embodiment 1, wherein:
   the first set of pneumatic coupling feet includes a first pneumatic coupling foot extending from a first end of the first slide rail and a second pneumatic coupling foot extending from a second end of the first slide rail; and
   the second set of pneumatic coupling feet includes a third pneumatic coupling foot extending from a third end of the second slide rail and a fourth pneumatic coupling foot extending from a fourth end of the second slide rail.
7. The robotic scanning device of embodiment 1, wherein:
   the control housing includes:
   a first roller positioned against the first slide rail and controlled by a first servo motor; and
   a second roller positioned against the second slide rail and controlled by a second servo motor.
8. The robotic scanning device of embodiment 7, further comprising:
   a mounting board of the control housing;
   a first post for the first roller extending from a first position on the mounting board; and
   a second post for the second roller extending from a second position on the mounting board.
9. The robotic scanning device of embodiment 8, further comprising:
   a wireless transmitter operable to send sensor data collected by the scanning sensor to a remote computing device, the remote computing device being configured to use the sensor data to generate, for presentation at a display, a visual indication of cracking or de-lamination.
10. The robotic scanning device of embodiment 9, wherein:
   a pneumatic coupling foot of the first set of pneumatic coupling feet includes a five-channel, electromechanical valve vacuum generator.
11. A robotic scanning device comprising:
   a sliding axis-based mobility system including:
      a first slide rail coupled to a second slide rail by a control housing;
      a first actuatable coupling foot extending from the first slide rail; and
      a second actuatable coupling foot extending from the second slide rail;
   a scanning sensor disposed on the sliding axis-based mobility system; and
   a computing device including a control system operable to perform a mobility maneuver by sending one or more instructions causing at least one of:
      a movement of the first slide rail relative to the second slide rail; or
      a change to a suction force generated by the first actuatable coupling foot or the second actuatable coupling foot.
12. The robotic scanning device of embodiment 11, wherein:
   the first actuatable coupling foot includes:
   an extendable, retractable, and rotatable pneumatic cylinder; and
   a pneumatically lockable ball joint coupled to an end of the pneumatic cylinder.
13. The robotic scanning device of embodiment 11, wherein:
   the computing device is further operable to perform a two-axis scan with the scanning sensor during the mobility maneuver.
14. The robotic scanning device of embodiment 11, wherein:
   the scanning sensor includes an ultrasonic sensor coupled to the first slide rail or the second slide rail.
15. The robotic scanning device of embodiment 14, wherein:
   the ultrasonic sensor uses a water interface to attach to a target surface.
16. The robotic scanning device of embodiment 15, further comprising:
   a water supply container providing water to the water interface; and
   a water circulation system for collecting and redistributing the water back to the water supply container.
17. A method of performing a structural scan comprising:
   securing a first slide rail, defining a first axis of a robotic scanning device, to a target surface of a structure using one or more first actuatable feet extending from the first slide rail;
   sliding a second slide rail, defining a second axis of the robotic scanning device perpendicular to the first axis, relative to the first slide rail;
   actuating one or more second actuatable feet extending from the second slide rail to secure the second slide rail to the target surface;
   releasing the one or more first actuatable feet from the target surface;
   sliding the first slide rail relative to the second slide rail; and
   scanning the target surface with a scanning sensor disposed on the first slide rail or the second slide rail.
18. The method of embodiment 17, wherein:
   sliding the second slide rail includes actuating one or more rollers disposed at a control housing which links the first slide rail to the second slide rail.
19. The method of embodiment 17, further comprising:
   generating sensor data, with the scanning sensor, representing a scanned structure; and
   presenting, at a display device and based on the sensor data, an indication of at least one of cracking or de-lamination.
20. The method of embodiment 17, further comprising:
   performing a plurality of mobility maneuvers, with the robotic scanning device, based on dimension data corresponding to a structure of the target surface, the plurality of mobility maneuvers including:
   a linear motion created by sliding the first slide rail relative to the target surface while the second slide rail is secured to the target surface; and
   a rotational motion created by simultaneously sliding, relative to a control housing, the first slide rail and the second slide rail, while maintaining:
      a first end of the first slide rail secured to the target surface; and
      a second end of the second slide rail to the target surface.

## Claims

1. A robotic scanning device comprising:
a sliding axis-based mobility system including:
a first slide rail movably coupled to a second slide rail by a control housing;
a first set of pneumatic coupling feet extending from the first slide rail; and
a second set of pneumatic coupling feet extending from the second slide rail;
a scanning sensor disposed on the sliding axis-based mobility system; and
a computing device including a control system operable to perform a mobility maneuver by sending an instruction causing the second slide rail to move relative to the first slide rail.

2. The robotic scanning device of claim 1, wherein:
the control housing defines a first rail channel for receiving the first slide rail and a second rail channel for receiving the second slide rail such that the first slide rail is positioned between 80° and 100° relative to the second slide rail; and
the scanning sensor includes an ultrasonic-based data acquisition system.

3. The robotic scanning device of any of claims 1 or 2, wherein:
the mobility maneuver includes a linear motion of the robotic scanning device caused by a series of operations performed by the control system including:
maintaining a first suction force with the first set of pneumatic coupling feet to secure the first slide rail to a target surface being scanned;
changing a position of the second set of pneumatic coupling feet by sliding the first slide rail relative to the second slide rail;
actuating the second set of pneumatic coupling feet to create a second suction force securing the second slide rail to the target surface;
decreasing the first suction force to release the first set of pneumatic coupling feet from the target surface; and
changing a position of the first set of pneumatic coupling feet by sliding the first slide rail relative to the second slide rail.

4. The robotic scanning device of any of claims 1 to 3, wherein:
the mobility maneuver includes a rotational motion caused by a series of operations performed by the control system including:
maintaining a first suction force with a first pneumatic coupling foot to secure a first end of the first slide rail to a target surface;
maintaining a second suction force with a second pneumatic coupling foot to secure a second end of the second slide rail to the target surface; and
simultaneously sliding the first slide rail relative to the control housing and sliding the second slide rail relative to the control housing.

5. The robotic scanning device of any of claims 1 to 4, wherein:
the first set of pneumatic coupling feet includes a first pneumatic coupling foot extending from a first end of the first slide rail and a second pneumatic coupling foot extending from a second end of the first slide rail; and
the second set of pneumatic coupling feet includes a third pneumatic coupling foot extending from a third end of the second slide rail and a fourth pneumatic coupling foot extending from a fourth end of the second slide rail.

6. The robotic scanning device of any of claims 1 to 5, wherein:
the control housing includes:
a first roller positioned against the first slide rail and controlled by a first servo motor; and
a second roller positioned against the second slide rail and controlled by a second servo motor.

7. The robotic scanning device of claim 6, further comprising:
a mounting board of the control housing;
a first post for the first roller extending from a first position on the mounting board; and
a second post for the second roller extending from a second position on the mounting board.

8. The robotic scanning device of any of claims 1 to 7, further comprising:
a wireless transmitter operable to send sensor data collected by the scanning sensor to a remote computing device, the remote computing device being configured to use the sensor data to generate, for presentation at a display, a visual indication of cracking or de-lamination.

9. The robotic scanning device of any of claims 1 to 8, wherein:
a pneumatic coupling foot of the first set of pneumatic coupling feet includes a five-channel, electromechanical valve vacuum generator.

10. The robotic scanning device of claim 9, wherein:
the pneumatic coupling foot includes:
an extendable, retractable, and rotatable pneumatic cylinder; and
a pneumatically lockable ball joint coupled to an end of the extendable, retractable, and rotatable pneumatic cylinder.

11. The robotic scanning device of any of claims 1 to 10, wherein:
the computing device is further operable to perform a two-axis scan with the scanning sensor during the mobility maneuver;
the scanning sensor includes an ultrasonic sensor coupled to the first slide rail or the second slide rail; and.
the ultrasonic sensor uses a water interface to attach to a target surface.

12. The robotic scanning device of claim 11, further comprising:
a water supply container providing water to the water interface; and
a water circulation system for collecting and redistributing the water back to the water supply container.

13. A method of performing a structural scan comprising:
securing a first slide rail, defining a first axis of a robotic scanning device, to a target surface of a structure using one or more first actuatable feet extending from the first slide rail;
sliding a second slide rail, defining a second axis of the robotic scanning device perpendicular to the first axis, relative to the first slide rail;
actuating one or more second actuatable feet extending from the second slide rail to secure the second slide rail to the target surface;
releasing the one or more first actuatable feet from the target surface;
sliding the first slide rail relative to the second slide rail; and
scanning the target surface with a scanning sensor disposed on the first slide rail or the second slide rail.

14. The method of claim 13, further comprising:
actuating one or more rollers disposed at a control housing which links the first slide rail to the second slide rail;
generating sensor data, with the scanning sensor, representing a scanned structure; and
presenting, at a display device and based on the sensor data, an indication of at least one of cracking or de-lamination.

15. The method of any of claims 13 or 14, further comprising:
performing a plurality of mobility maneuvers, with the robotic scanning device, based on dimension data corresponding to a structure of the target surface, the plurality of mobility maneuvers including:
a linear motion created by sliding the first slide rail relative to the target surface while the second slide rail is secured to the target surface; and
a rotational motion created by simultaneously sliding, relative to a control housing, the first slide rail and the second slide rail, while maintaining:
a first end of the first slide rail secured to the target surface; and
a second end of the second slide rail to the target surface.
